Europäisches Patentamt

European Patent Office

Office européen des brevets

(11) Numéro de publication: **0 413 820 A1**

## (12) DEMANDE DE BREVET EUROPEEN PUBLI E EN APPLICATION DE L'article 158, paragraphe 3 de la CBE

(21) Numéro de dépôt: 89907875.2

(22) Date de dépôt: 07.03.89

(86) Numéro de dépôt internationale :
PCT/SU89/00058

(87) Numéro de publication internationale :
WO 90/10802 (20.09.90 90/22)

(51) Int. Cl.⁵: **F16F 9/14**

(43) Date de publication de la demande:
27.02.91 Bulletin 91/09

(84) Etats contractants désignés:
**AT CH DE FR GB IT LI SE**

(71) Demandeur: **NAUCHNO-PROIZVODSTVENNOE OBIEDINENIE PO ISSLEDOVANIJU I PROEKTIROVANIJU ENERGETICHESKOGO OBORUDOVANIA IMENI I.I.POLZUNOVA**
ul. Politeknicheskaya, 24
Leningrad, 194021(SU)

(72) Inventeur: **PAVLOV, Dmitry Jurievich**
Zamshina ul., 23-1-181
Leningrad, 195271(SU)
Inventeur: **VETOSHKIN, Vladimir Alexandrovich**
Bukharestskaya ul., 23-1-181
Leningrad, 192282(SU)
Inventeur: **KOSTAREV, Viktor Vladimirovich**
Bogatyrsky pr., 4-478
Leningrad, 197348(SU)
Inventeur: **SCHUKIN, Alexandr Jurievich**
Lenskaya ul., 6-3-149
Leningrad, 198298(SU)
Inventeur: **MITROFANOV, Leopold Adamovich**
pr. Kosmonavtov, 80-19
Leningrad, 196233(SU)
Inventeur: **DANILOV, Evgeny Andreevich** ul. Ryadovogo
L.Ivanova, 23-71 Vsevolozhsky raion, poselok Kuzmolovo Leningradskaya oblast, 188663(SU)
Inventeur: **LOBKOV, Vasily Danilovich**
Krasnoputilovskaya ul., 109-23
Leningrad, 196240(SU)

(74) Mandataire: **Rodhain, Claude et al**
Cabinet Claude Rodhain 30, rue la Boétie
F-75008 Paris(FR)

(54) **AMORTISSEUR VISCO-ELASTIQUE.**

(57) L'amortisseur comporte un réservoir (1) pour un liquide (2) et un piston (3) placé dans ce réservoir (1). Le piston (3) est entouré d'au moins une enveloppe (6) se situant dans le réservoir (1). Une paroi latérale (7) du réservoir (1), le piston (3) et les enveloppes (6) sont disposés avec un jeu l'un par rapport à l'autre. Chaque enveloppe (6) est disposée de manière à pouvoir se déplacer toute seule sur le fond (5) du réservoir (1) et en tout sens.

EP 0 413 820 A1

FIG.1

## AMORTISSEUR VISCOELASTIQUE

Domaine de l'invention

L'invention concerne les constructions mécaniques et a notamment pour objet un amortisseur viscoélastique. L'invention peut servir par excellence à absorber les charges dynamiques de toutes sortes d'équipement tel que les conduites, les tuyauteries qui doivent subir de fortes charges en cas de vibrations, d'accidents ou de tremblements de terre.

Etat de la technique

Le paramètre principal caractérisant l'efficacité du fonctionnement d'un amortisseur viscoélastique est son coefficient de résistance. Plus élevé est le coefficient de résistance, plus efficace est le fonctionnement d'un tel amortisseur.

Le coefficient de résistance de l'amortisseur dépend de la viscosité du liquide qu'il contient et de la conception de l'amortisseur.

Bien qu'en augmentant la viscosité du fluide on obtienne une certaine amélioration du coefficient de résistance de l'amortisseur et, donc, un certain gain d'efficacité de son fonctionnement, en même temps l'augmentation de la viscosité du fluide au-delà d'une certaine limite entraîne des ruptures du fluide pendant le fonctionnement de cet amortisseur, ce qui réduit en somme son rendement. Ainsi, pour améliorer le rendement d'un amortisseur il ne reste qu'une seule voie, celle du perfectionnement de sa construction.

On connait un amortisseur viscoélastique comprenant un réservoir ouvert, de forme cylindrique en section horizontale, rempli d'un fluide visqueux, et un piston attaché à un dispositif à protéger des vibrations, placé dans ledit réservoir avec un jeu par rapport à la paroi latérale du réservoir. Le piston se présente comme un cylindre fermé par une face et se dispose de façon à s'ouvrir du côté du fond du réservoir. La valeur du jeu entre le piston et la paroi latérale du réservoir doit être plus grande que la valeur prédéterminée des déplacements de ces deux éléments l'un par rapport à l'autre. (VDI BERICHTE, n 603, 1986, pp.263-291, "Die Re duzierung von Rohrleitungsschwingungen im Betrieb und im Störfall mittels viskoser Dämpfer", Dr-ing W.Kuitzsch, Berlin, Dr.rer.nat K.Delinic und Dipl-ing F.Zerrmayr Erlangen).

Cette conception de l'amortisseur est utilisée pratiquement par tous les pays industrialisés comme amortisseur pour équipement.

Lorsqu'un piston placé dans un réservoir rempli d'un liquide visqueux est sollicité par des charges dynamiques provenant de l'équipement à protéger et dues, par exemple, aux vibrations de cet équipement, ledit piston se déplace à l'intérieur de ce réservoir. Pendant ce déplacement, il se produit la déformation de ce liquide (déplacement mutuel des couches du liquide) provoquant le passage de ce liquide à partir de la zone du jeu en train de diminuer vers la zone du jeu en train d'augmenter. La vitesse d'une telle déformation du liquide détermine la résistance opposée par le fluide visqueux au déplacement du piston qui, à son tour, détermine le coefficient de résistance de l'amortisseur. Ladite résistance du liquide diminue la vitesse de déplacement du piston et, par la-même, celle du matériel à protéger en modérant ainsi ses vibrations.

Cependant, cette conception de l'amortisseur s'avère peu efficace en service. Etant donné que le coefficient de résistance de l'amortisseur de conception précitée augmente avec la diminution du jeu entre le piston et la paroi latérale du réservoir, pour gagner en efficacité de l'amortisseur on doit tendre à réduire ce jeu. Mais, d'autre part, la valeur du jeu doit dépasser, comme il a été déjà indiqué, l'amplitude prédéterminée des déplacements du piston eu égard à la paroi latérale du réservoir, ce qui ne fait que réduire l'efficacité de l'amortisseur.

Divulgation

La présente invention vise un amortisseur viscoélastique qui comporte en outre des éléments tels et ces éléments sont disposés d'une façon telle qu'en maintenant entre le piston et la paroi latérale du réservoir une valeur de jeu dépassant l'amplitude prescrite de déplacement du piston par rapport à ladite paroi latérale, on réussit à augmenter le coefficient de résistance de l'amortisseur et à améliorer ainsi son efficacité.

Le but ainsi formulé est atteint du fait que, dans un amortisseur viscoélastique comportant un réservoir de liquide visqueux et un piston placé dans ledit réservoir, conformément à l'invention, le piston est entouré d'au moins une enveloppe disposée dans le réservoir, la paroi latérale du réservoir et tous les éléments mentionnés se trouvant dans le réservoir sont disposés l'un par rapport à l'autre avec des jeux et chaque enveloppe est disposée de manière à permettre un déplacement autonome le long du fond du réservoir en tout sens.

La présence d'une enveloppe disposée avec un jeu par rapport au piston et à la paroi du réservoir fait augmenter le coefficient de résistance de l'amortisseur et, donc, l'efficacité de son fonctionnement grâce à la réduction du jeu entre les éléments adjacents, à savoir entre le piston et l'enveloppe, entre l'enveloppe et la paroi latérale du réservoir et, si les enveloppes sont nombreuses, entre les enveloppes voisines. La disposition de chacune des enveloppes de manière à permettre un déplacement autonome le long du fond du réservoir en tout sens voulu assure l'amplitude de déplacements du piston par rapport à la paroi latérale du réservoir supérieure à la valeur de chacun desdits jeux.

Tous les éléments disposés dans le réservoir et la paroi latérale du réservoir ont chacun avantageusement, la forme d'un cylindre et sont disposés coaxialement l'un par rapport à l'autre, les valeurs des jeux entre ces éléments cylindriques, toujours avantageusement, croissent à partir du piston, le rapport entre les rayons de tous deux éléments adjacents est constant et tous les éléments cylindriques sont fixés l'un par rapport à l'autre à l'aide d'éléments élastiques.

Une telle réalisation de l'amortisseur est optimale du point de vue de l'efficacité, comme l'ont montré les essais.

Avantageusement, les éléments élastiques sont disposés dans les espacements entre les éléments cylindriques.

Une telle disposition des éléments élastiques est la plus simple du point de vue de la conception.

Toujours avantageusement, le piston a la forme d'un godet et l'amortisseur est muni d'un poids de forme cylindrique dont la base se dispose sur le fond du réservoir avec la possibilité de se déplacer le long de ce fond du réservoir en toute direction désirée, ce poids se plaçant avec un jeu radial à l'intérieur du piston.

Une telle conception contribue à l'amélioration du coefficient de résistance de l'amortisseur et, donc, à son efficacité, étant donné que pendant le fonctionnement de l'amortisseur, le piston, en se dépaçant, fait déplacer le poids qui, glissant sur le fond du réservoir, oppose une résistance additionnelle au mouvement du piston. En outre, le coefficient de résistance de l'amortisseur croît aussi grâce à la création d'un jeu entre les éléments (piston et poids) qui se déplacent l'un par rapport à l'autre en cours de fonctionnement de l'amortisseur. Enfin, la présence d'un poids mène à la réduction de la consommation en liquide grâce à son expression, ce qui améliore l'économie de l'amortisseur, surtout de grandes dimensions.

Brève description du dessin.

La présente invention sera mieux comprise à la lecture de la description détaillée qui suit d'un mode de réalisation l'amortisseur viscoélastique fait en référence au dessin annexé, sur lequel :

la figure 1     représente un amortisseur selon l'invention, vue en coupe,
la figure 2     est une section selon la ligne II-II de la figure 1.

Mode préféré de réalisation de l'invention.

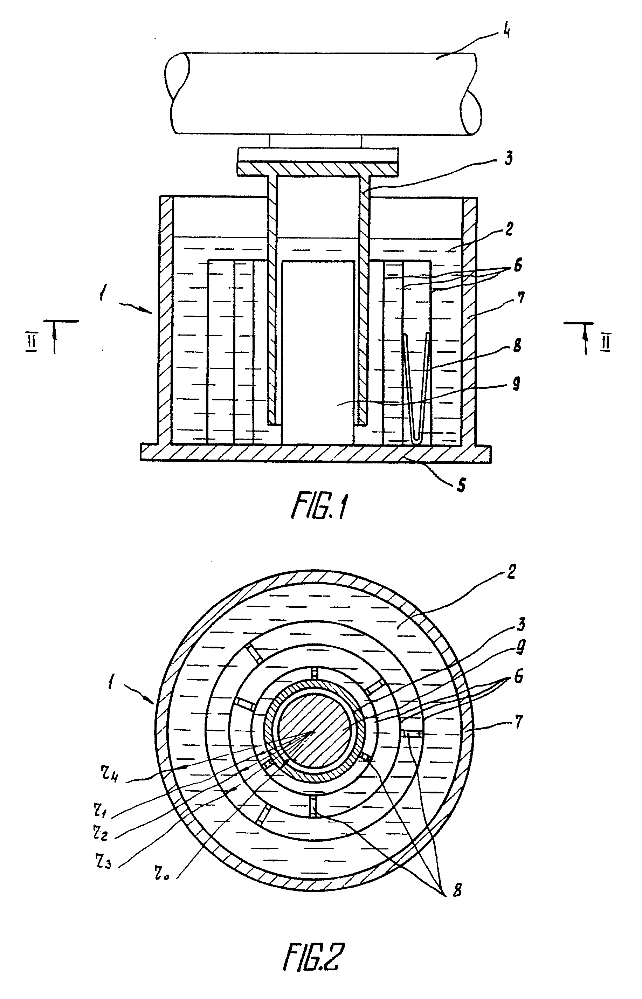

Un amortisseur viscoélastique comporte un réservoir cylindrique ouvert 1 (figure 1) disposé sur une base fixe (non représentée). Le réservoir 1 est rempli d'un liquide 2 d'une viscosité entre 100 et 10000Po (10 et 1000 Pa.s). Comme liquide visqueux on peut utiliser, par exemple, un polymère de silicone avec la viscosité dynamique de 1500 Po (150 Pa.s) environ à la température de 20˚ C.

A l'intérieur du réservoir 1, d'une manière coaxiale à celui-ci est placé un piston cylindrique 3 fixé sur l'équipement à protéger 4. Le piston 3 est réalisé comme un godet orienté par son bout ouvert vers le fond 5 du réservoir 1 et est entouré d'enveloppes cylindriques 6 librement placées sur le fond 5 du réservoir 1 coaxialement au piston 3. La paroi latérale 7 du réservoir 1, toutes les enveloppes 6 et le piston 3 sont disposés avec des jeux l'un par rapport à l'autre. Les enveloppes 6 sont complétement plongées dans le liquide et ont des dimensions telles que les valeurs de tous les jeux s'accroissent à partir du piston 3 alors que le rapport entre les rayons de tous deux éléments cylindriques adjacents: de la paroi latérale 7 du réservoir 1, des enveloppes cylindriques 6 et du piston 3, est une valeur constante, à savoir $r_4/r_3 = r_3/r_2 =$

$r_2/r_1 = r_1/r_0$ avec $r_4 > r_3 > r_2 > r_1 > r_0$ où

$r_4$ : rayon de la surface intérieure de la paroi latérale 7.

$r_1, r_2, r_3$ : rayons des enveloppes cylindriques,

$r_0$ : rayon du piston (figure 2).

Une telle relation entre les rayons est la meilleure du point de vue du coefficient de résistance de l'amortisseur. Les rapports (indiqués ci-dessus) des rayons peuvent aussi être différents, mais le coefficient de résistance de l'amortisseur sera dans ce cas un peu plus bas. Le nombre d'enveloppes 6 est déterminé par calcul ou par expérience en partant des conditions assurant le meilleur coefficient de résistance de l'amortisseur et il dépend des caractéristiques de l'équipement à protéger. Le nombre d'enveloppes peut également différer de celui du calcul; quoique dans ce cas--là le coefficient de résistance de l'amortisseur ne soit pas le meilleur, il sera supérieur à celui d'un amortisseur pareil dépourvu d'enveloppes 6. Tous les jeux se communi quent par l'intermédiaire de la couche supérieure du liquide se situant plus haut que le niveau d'emplacement des enveloppes 6. Chaque jeu, aussi bien entre le piston 3 et l'enveloppe 6 qui lui est adjacent, qu'entre les enveloppes voisines 6, contient des éléments élastiques 8 assurant la disposition coaxiale du piston 3, des enveloppes 6 et de la paroi latérale 7 du réservoir 1. Chaque élément élastique 8 se présente comme un ressort à plaque en V en appui sur le fond 5 du réservoir 1 et dont les bras sont appliqués contre les éléments cylindriques différents 3, 6. D'autres modes de disposition des éléments élastiques 8 sont également possibles, par exemple ils peuvent se trouver plus haut que le niveau des enveloppes 6. D'autres modes de réalisation de la conception des éléments élastiques 8 sont aussi possibles.

Le fond 5 du réservoir 1 reçoit librement la base du poids 9 de forme cylindrique qui s'engage a l'intérieur du piston 3 avec un jeu radial. La présence du poids 9 dans l'amortisseur n'est pas obligatoire.

L'amortisseur viscoélastique fonctionne comme suit.

Lorsque des charges dynamiques provenant de l'équipement à protéger agissent sur le piston 3, celui-ci se déplace à l'intérieur du réservoir 1 en entraînant avec lui les enveloppes cylindriques 6 et le poids 9. Ces déplacements du piston 3 et des enveloppes 6 conduisent à ce que le liquide visqueux 2 se déforme et, en passant de la zone de jeux en train de diminuer vers la zone de jeux en train d'augmenter, oppose une résistance aux déplacements du piston 3. Etant donné que le coefficient de résistance de l'amortisseur et, donc son efficacité, croît avec la diminution du jeu entre les éléments formant ce jeu et disposés avec la possibilité de déplacement l'un par rapport à l'autre, l'efficacité de l'amortisseur viscoélastique objet de l'invention croît grâce à la présence des enveloppes 6 ayant pour rôle de diminuer les jeux entre les éléments voisins 3,6. A noter que la disposition de chaque enveloppe 6 en déplacement libre sur le fond 5 du réservoir 1 en tout sens, assure pratiquement toute amplitude voulue de déplacement du piston 3 par rapport à la paroi latérale 7 du réservoir 1.

Lorsque le piston 3 ou une des enveloppes 6 de n'importe quelle paire adjacente des éléments 3, 6 se déplace en direction de l'enveloppe voisine 6, cette dernière se déplace un peu elle aussi dans la même direction à cause de la déformation du liquide visqueux 2, ce qui abaisse un peu l'efficacité du travail de l'amortisseur. Mais , comme la réduction des jeux entre tous éléments contigus 3, 6, 7 influe beaucoup plus que ce déplacement de l'enveloppe sur le travail efficace de l'amortisseur, l'efficacité de fonctionnement de l'amortisseur s'améliore finalement ce qui est confirmé par les essais.

Le poids 9 en se déplaçant sous l'action du piston 3 glisse sur le fond 5 du réservoir 1 en créant une résistance additionnelle au déplacement du piston 3, ce qui améliore davantage l'efficacité de l'amortisseur.

Les éléments élastiques 8 assurent la disposition coaxiale du piston 3, des enveloppes cylindriques 6 et de la paroi latérale 7 du réservoir 1 au cas où l'amortisseur ne reçoit pas de charges depuis l'équipement 4.

Le coefficient de résistance de l'amortisseur objet de l'invention a été déterminé par voie expérimentale lors des essais de l'amortisseur sur un banc d'essai de conception connue.

Le réservoir cylindrique contenant le liquide visqueux est placé sur une plaque vibrante du banc d'essai et le piston cylindrique est connecté par un élément servant à mesurer un effort à la base fixe. On :mesure l'effort de résistance au déplacement du piston en milieu visqueux par rapport au réservoir lors de ces oscillations à l'aide de l'élément de mesure. Le coefficient de résistance est déterminé comme le rapport de cet effort de résistance à la vitesse de déplacement du piston par rapport au réservoir. Les expériences sont réalisées dans l'intervalle des fréquences d'oscillations du réservoir de 4 à 30 Hz pour une amplitude d'oscillations de 2 mm.

Le modèle de l'amortisseur à essayer a les dimensions suivantes: le diamètre intérieur du corps: 206 mm, le diamètre extérieur du piston : 108 mm, la hauteur du corps: 180 mm. Les diamètres des enveloppes, mm $D_1$ : 117, $D_2$ :127, $D_3$ : 138, $D_4$ : 149, $D_5$ : 162, $D_6$ : 175, $D_7$ : 190 ; la hauteur des enveloppes : 162 mm, l'épaisseur : 1,5 mm. La hauteur du poids : 162 mm, la masse du poids : 4 kg. La profondeur de plongement du piston dans le liquide : de 150 à 165 mm. Comme fluide de travail, on utilise un polymère de silicone présentant la viscosité dynamique de 1500 Po (150 Pa.s) environ à la température de 20°C et la densité 0,96.

Les résultats des essais de l'amortiseur viscoélastique sont résumés dans le tableau ci-après :

| N par ord. | Version de la construction | Coefficient de résistance de l'amortisseur, kg/cm à la fréquence de vibration, Hz : | | | | |
|---|---|---|---|---|---|---|
| | | 4 | 8 | 12 | 20 | 30 |
| 1. | Amortisseur connu (sans enveloppes) | 0,48 | 0,35 | 0,30 | 0,25 | 0,27 |
| 2. | Une enveloppe de diamètre $D_2$:127 mm sans poids (rapport des rayons pour éléments cylindriques n'est pas le meilleur) | 0,87 | 0,63 | 0,50 | 0,30 | 0,30 |
| 3. | Une enveloppe de diamètre $D_4$:149 mm sans poids (rapport optimal des rayons) | 1,79 | 1,32 | 1,04 | 0,79 | 0.66 |
| 4. | Une enveloppe de diamètre $D_4$:149 mm avec un poids | 3,26 | 2,14 | 1,60 | 1,22 | 1,16 |
| 5. | Trois enveloppes de diamètres $D_2$:127 mm, $D_4$:149 mm, et $D_6$:175 mm sans poids (meilleur rapport des rayons) | 7,18 | 4,69 | 3,66 | 2,74 | 2,20 |

suite du tableau

| 1 | 2 | 3 | 4 | 5 | 6 | 7 |
|---|---|---|---|---|---|---|
| 6. Sept enveloppes de diamètres $D_1$:117 mm, $D_2$:127 mm, $D_3$:138 mm, $D_4$:149 mm, $D_5$:162 mm, $D_6$:175 mm, $D_7$:190 mm, sans poids (meilleur rapport des rayons) | | 20,60 | 13,20 | 9,53 | 7,24 | 5,70 |

Comme montre le tableau, la présence des enveloppes dans l'amortisseur (modèles 2 à 6) conduit à l'augmentation du coefficient de résistance par comparaison avec le modèle connu (nl) sans enveloppes.

En outre, le coefficient de résistance de l'amortisseur avec le meilleur rapport des diamètres pour éléments cylindriques (n 3) est supérieur à celui de l'amortisseur identique mais dont le rapport des diamètres n'est pas optimal (n 2), et le coefficient de résistance de l'amortisseur avec un poids (n 4) est supérieur à celui de l'amortisseur identique mais sans poids ( n 3).

Application industrielle

La présente invention est applicable dans l'amortissement des charges dynamiques sur toutes sortes d'équipement telsque les conduites et tuyauteries, ces charges apparaissant lors des vibrations d'un tel équipement.

**Revendications**

1. Amortisseur viscoélastique comportant un réservoir (1) pour un liquide (2) et un piston (3) placé dans ce réservoir (1), un de ces éléments étant destiné à être fixé à un dispositif (4) devant être protégé des oscillations **caractérisé** en ce que le piston (3) est entouré d'au moins une enveloppe (6) disposée dans le réservoir (1), en ce qu'une paroi latérale (7) du réservoir (1) et tous les éléments indiqués (3, 6) disposés dans le réservoir (1) sont disposés l'un par rapport à l'autre avec des jeux et en ce que chaque enveloppe (6) est placée de manière à pouvoir se déplacer sur le fond (5) du réservoir (1) toute seule et en tout sens.

2. Amortisseur selon la revendication 1, caractérisé en ce que tous les éléments (3, 6) disposés dans le réservoir (1) et la paroi latérale (7) du réservoir (1) ayant, chacun, la forme connue en soi d'un cylindre, sont placés coaxialement l'un par rapport à l'autre, les valeurs de jeux entre ces éléments cylindriques (3, 6, 7) croissant à partir du piston (3), alors que le rapport des rayons pour tous deux éléments cylindriques adjacents (3, 6, 7) est une valeur constante, ces éléments cylindriques étant fixés l'un par rapport à l'autre à l'aide d'éléments élastiques (8).

3. Amortisseur selon la revendication 2, caractérisé en ce que les éléments élastiques (8) sont placés dans les espacements entre les éléments cylindriques (3, 6).

4. Amortisseur selon l'une des revendications 1, 2 ou 3, caractérisé en ce qu'il est pourvu d'un poids (9) de forme cylindrique dont la base se dispose sur lefond (5) du réservoir (1) de manière à pouvoir se déplacer sur ce fond (5) en tout sens ledit poids (9) s'engagea,t avec un jeu radial à l'intérieur du piston (3) se présentant comme un godet connu en soi.

FIG.1

FIG.2

# INTERNATIONAL SEARCH REPORT

International Application No PCT/SU 89/00058

**I. CLASSIFICATION OF SUBJECT MATTER** (if several classification symbols apply, indicate all) 6

According to International Patent Classification (IPC) or to both National Classification and IPC

F 16 F 9/14

**II. FIELDS SEARCHED**

Minimum Documentation Searched 7

| Classification System | Classification Symbols |
|---|---|
| Int. Cl.4 | F 16 F 5/00, 9/00, 9/10, 9/14, 9/16, 11/00, 13/00 |

Documentation Searched other than Minimum Documentation
to the Extent that such Documents are Included in the Fields Searched 8

**III. DOCUMENTS CONSIDERED TO BE RELEVANT** 9

| Category * | Citation of Document, 11 with indication, where appropriate, of the relevant passages 12 | Relevant to Claim No. 13 |
|---|---|---|
| A | SU, A1, 1295079 (Proektny i nauchno-issledovatelsky institut "Donetsky Promstroiniiproekt") 07 March 1987 (07.03.87) --- | 1, 2 |
| A | SU, A1, 1173085 (Kazansky inzhenerno-stroitelny institut) 15 August 1985 (15.08.85), fig.1, the claims --- | 2 |
| A | SU, A1, 1076661 (Kazansky inzhenerno-stroitelny institut) 28 February 1984 (28.02.84), the drawing, the claims --- | 2 |
| A | CH, A5, 495515 (Gebrüder Sulzer, Aktiengesellschaft), 15 October 1970 (15.10.70), figure 3,4 pos 9, column 2, lines 15-40 --- | 1, 2 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 21 September 1989 (21.09.89) | 17 November 1989 (17.11.89) |

| International Searching Authority | Signature of Authorized Officer |
|---|---|
| ISA/SU | |

Form PCT/ISA/210 (second sheet) (January 1985)

| **III. DOCUMENTS CONSIDERED TO BE RELEVANT   (CONTINUED FROM THE SECOND SHEET)** | | |
|---|---|---|
| Category * | Citation of Document, with indication, where appropriate, of the relevant passages | Relevant to Claim No |
| A | GB, B, 1509223 (Westinghouse Electric Corporation), 04 May 1978 (04.05.78), figure 2, 2A, pos. 28, 31, column 3, lines 63-65, column 4, lines 66-77 | 2, 3 |
| | --- | |
| A | GB, B 1425691 (Dornier GMBH), 18 February 1976, (18.02.76), figure 3, column 3, lines 3-4; column 5, lines 21-40 | 1, 2 |
| | --- | |
| A | EP, A1, 0244552 (Dipl-Ing. Herbert Glaunach Schall-und Schwingungsisolierungen) 11 November 1987 (11.11.87), figure 2, pos.17; column 3, lines 21-39 | 4 |